# EUROPEAN PATENT APPLICATION

(11) **EP 4 596 357 A1**
(43) Date of publication of application: **06.08.2025**
(21) Application number: 23884340.3
(22) Date of filing: 01.08.2023
(51) Int. Cl.: B60W 50/14, B60R 16/037, B60Q 9/00

(54) **CONTROL METHOD AND APPARATUS, AND VEHICLE**

(30) Priority: 31.10.2022 CN 202211349258
(71) Applicant: Shenzhen Yinwang Intelligent Technologies Co., Ltd., Shenzhen, Guangdong 518129 (CN)
(72) Inventor: DENG, Jiayu, Shenzhen, Guangdong 518129 (CN); ZHAO, Yang, Shenzhen, Guangdong 518129 (CN); QIU, Xiaojun, Shenzhen, Guangdong 518129 (CN)
(74) Representative: Pfenning, Meinig & Partner mbB
(86) International application number: PCT/CN2023/110564
(87) International publication number: WO 2024/093401

(57) **Abstract**

A control method and apparatus, and a carrier are provided. The method includes: obtaining traveling information of the carrier; and when the carrier accelerates or decelerates in response to an indication of a user in the carrier, controlling, based on the traveling information, at least two sound-emitting apparatuses in a cabin of the carrier to play a first simulated sound wave with a sound image shift. Further, at least one of a light display device, an air conditioner, a seat, and a steering wheel is controlled based on the first simulated sound wave. The method may be applied to a carrier such as an intelligent vehicle or an electric vehicle. In an acceleration or deceleration process of the carrier, a simulated sound wave with sound image shift effect is played. This helps improve human-machine interaction experience and driving and riding experience of the user. The sound-emitting apparatuses are linked to the light display device, the air conditioner, the seat, and the steering wheel, to form audio-lighting effect, audio-vibration effect, and audio-wind effect, so that the user experiences, from a plurality of dimensions, the simulated sound wave that changes with a speed of the carrier.

## Description

This application claims priority to Chinese Patent Application No. 202211349258.3, filed with the China National Intellectual Property Administration on October 31, 2022 and entitled "CONTROL METHOD AND APPARATUS, AND CARRIER", which is incorporated herein by reference in its entirety.

### TECHNICAL FIELD

This application relates to the field of intelligent cabins, and more specifically, to a control method and apparatus, and a carrier.

### BACKGROUND

In the field of new energy vehicles, due to wide application of electric assemblies and progress of a noise, vibration, and harshness (noise, vibration, and harshness, NVH) technology of the vehicle, a vehicle cabin is increasingly quiet, which results in poor driving and riding experience of a user. Due to lack of masking of sounds such as a roar of an engine, in a traveling process of the vehicle, tire noise that may be heard in the cabin is clearer, which increases annoyance of the user. In addition, a sound used to highlight strength of a power system of the vehicle disappears, which may weaken sensation of the user for vehicle performance. Moreover, it is difficult for the user to identify a dynamic vehicle condition (for example, a speed or load) of the vehicle through a sound, which weakens human-vehicle interaction experience of the user.

### SUMMARY

Embodiments of this application provide a control method and apparatus, and a carrier. In an acceleration or deceleration process of the carrier, a simulated sound wave with sound image shift effect is generated and played based on a real-time working condition of the carrier, so that a user experiences, based on a sound image shift, that the carrier is in an acceleration or deceleration state. This helps improve human-machine interaction experience and driving and riding experience of the user.

The carrier in this application may include a road transportation means, a water transportation means, an air transportation means, an industrial device, an agricultural device, an entertainment device, or the like. For example, the carrier may be a vehicle. The vehicle is a vehicle in a broad sense, and may be a transportation means (such as a commercial vehicle, a passenger vehicle, a motorcycle, a flight vehicle, or a train), an industrial vehicle (such as a pallet truck, a trailer, or a tractor), an engineering vehicle (such as an excavator, a bulldozer, or a crane), an agricultural device (such as a lawn mower or a harvester), a recreation device, a toy vehicle, or the like. A type of the vehicle is not specifically limited in embodiments of this application. For another example, the carrier may be a transportation means such as an aircraft or a ship.

According to a first aspect, a control method is provided. The method may be performed by a carrier, or may be performed by a computing platform of a carrier, or may be performed by a chip or a circuit used for a carrier.

The method includes: obtaining traveling information of the carrier; and when the carrier accelerates or decelerates in response to an indication of a user in the carrier, controlling, based on the traveling information, at least two sound-emitting apparatuses in a cabin of the carrier to play a first simulated sound wave with a sound image shift.

In the foregoing technical solution, in an acceleration or deceleration process of the carrier, the first simulated sound wave with sound image shift effect is played, so that noise that may increase annoyance of the user, such as tire noise, can be masked, and the user can experience, based on the sound image shift, that the carrier is in an acceleration or deceleration state. This helps improve human-machine interaction experience and driving and riding experience of the user, and can improve a sense of science and technology of the carrier.

For example, the first simulated sound wave may include at least one of the following: a simulated sound of a fuel vehicle engine, a simulated sound of an aircraft engine, a simulated sound of a spaceship, a simulated sound of wind, and a simulated sound of an animal.

For example, the traveling information may include but is not limited to acceleration information, speed information, and steering wheel torque information. The acceleration information may be determined based on an opening signal of an accelerator pedal and/or an opening signal of a brake pedal, and the opening signal may include a pedal opening magnitude and/or a pedal opening change rate. Alternatively, the acceleration information may be determined through calculation based on a speed change rate of the carrier. The speed information may be determined based on a signal of a vehicle speed sensor or a wheel speed sensor, and the steering wheel torque may be determined based on a signal of a torque sensor.

In some possible implementations, in a traveling process of the carrier, when the carrier accelerates or decelerates in response to the indication of the user, an acceleration magnitude and/or an acceleration change rate in the acceleration or deceleration process may be determined based on the traveling information, to control, based on the acceleration magnitude and/or the acceleration change rate, the at least two sound-emitting apparatuses to play the first simulated sound wave with the sound image shift.

In some possible implementations, the traveling information may further include gear information of the carrier. Further, when the traveling information indicates that the carrier is in park or neutral, the opening signal of the accelerator pedal is detected, and the at least two sound-emitting apparatuses may be controlled, based on the opening signal of the accelerator pedal, to play the first simulated sound wave with the sound image shift.

It should be noted that a "sound image (sound image, or soundstage)" in this application may be understood as a "virtual sound source" or a "sensory sound source" formed by sounds emitted by the at least two sound-emitting apparatuses; and the "sound image shift" means that the "virtual sound source" moves from one position to another position.

In some possible implementations, the sound image shift may be implemented based on a psychoacoustic principle. For example, two sound-emitting apparatuses (including a first sound-emitting apparatus and a second sound-emitting apparatus) emit the first simulated sound wave with the sound image shift. The sound image shift may be implemented based on a principle of binaural effect. For example, volume (or level gain) of the first sound-emitting apparatus is gradually increased, and/or volume (or level gain) of the second sound-emitting apparatus is gradually decreased, and a delay of playing audio by the first sound-emitting apparatus and the second sound-emitting apparatus is controlled, so that a sound image of the first simulated sound wave shifts from the second sound-emitting apparatus to the first sound-emitting apparatus. In addition, based on a principle of Doppler effect, medium- and high-frequency audio components in the first sound-emitting apparatus and the second sound-emitting apparatus may be controlled, so that sound image shift effect sensed by the user is more realistic.

In some possible implementations, the sound image may be further used to represent one or more of a depth, a height, and a width of a sound emitted by a sound-emitting apparatus. For example, a sound image shift (sound image shift) may mean that a sound image position of a sound changes or moves toward a direction in a time interval. In this way, a simulated sound wave with a sound image shift may bring a sense of experience of a change of a sound spatial position to a user.

With reference to the first aspect, in some implementations of the first aspect, the controlling at least two sound-emitting apparatuses in a cabin of the carrier to play a first simulated sound wave with a sound image shift includes: controlling a sound image shift speed of the first simulated sound wave based on the acceleration magnitude of the carrier and/or the acceleration change rate of the carrier. The acceleration magnitude of the carrier and the acceleration change rate of the carrier are determined based on the traveling information.

For example, the acceleration magnitude indicates that the carrier is accelerating or decelerating. If the acceleration magnitude is a negative value, the carrier is decelerating. If the acceleration magnitude is a positive value, the carrier is accelerating.

In some possible implementations, a higher acceleration change rate indicates a higher sound image shift speed.

In the foregoing technical solution, a sound image shift direction and/or the sound image shift speed of the first simulated sound wave are/is controlled based on an actual acceleration of the carrier, so that the simulated sound wave better matches an actual running status of the carrier, and a sense of science and technology of the carrier and driving and riding experience of the user are improved.

With reference to the first aspect, in some implementations of the first aspect, the controlling at least two sound-emitting apparatuses in a cabin of the carrier to play a first simulated sound wave with a sound image shift includes: when the carrier is accelerating, controlling the sound image shift direction of the first simulated sound wave to be a first direction; or when the carrier is decelerating, controlling the sound image shift direction of the first simulated sound wave to be a second direction. The first direction and the second direction are opposite directions.

In the foregoing technical solution, when the carrier is separately accelerating and decelerating, the sound image shift directions of the first simulated sound wave are opposite, so that the user can clearly determine a motion status of the carrier based on the sound image shift direction, which helps improve driving and riding experience of the user.

With reference to the first aspect, in some implementations of the first aspect, whether the carrier is accelerating or decelerating is determined based on the traveling information.

In some possible implementations, whether the carrier is accelerating or decelerating is determined based on the acceleration magnitude of the carrier, and the acceleration magnitude is determined based on the traveling information.

With reference to the first aspect, in some implementations of the first aspect, the first direction is from rear of the carrier to front of the carrier, and the second direction is from the front of the carrier to the rear of the carrier.

With reference to the first aspect, in some implementations of the first aspect, the first direction is an upward direction parallel to a normal direction of a plane on which the carrier is located, and the second direction is a downward direction parallel to the normal direction of the plane on which the carrier is located.

With reference to the first aspect, in some implementations of the first aspect, the method further includes: determining, based on the traveling information, that the carrier steers to a third direction. The controlling at least two sound-emitting apparatuses in a cabin of the carrier to play a first simulated sound wave with a sound image shift includes: controlling the sound image shift direction of the first simulated sound wave based on the acceleration magnitude and the third direction.

For example, the third direction may be a right side of the carrier, or may be a left side of the carrier.

In some possible implementations, when the acceleration magnitude indicates that the carrier is accelerating and the carrier steers rightward, the sound image of the first simulated sound wave is controlled to shift from the rear of the carrier to the front of the carrier. When the sound image shifts to a fixed position, the sound image shifts from the fixed position to the right side of the carrier. For example, the fixed position may be an intersection point, in a direction perpendicular to a longitudinally symmetrical plane of the carrier, between a rear-view mirror of the carrier and the longitudinally symmetrical plane. When the acceleration magnitude indicates that the carrier is accelerating and the carrier steers leftward, the sound image of the first simulated sound wave is controlled to shift from the rear of the carrier to the front of the carrier. When the sound image shifts to a fixed position, the sound image shifts from the fixed position to the left side of the carrier.

In the foregoing technical solution, on a premise that the sound image shift is controlled based on the acceleration, steering information of the carrier is introduced to control the sound image shift direction, so that the carrier is more intelligent, interaction between the user and the carrier is improved, and driving and riding experience of the user is improved.

With reference to the first aspect, in some implementations of the first aspect, the controlling, based on the traveling information, at least two sound-emitting apparatuses in a cabin of the carrier to play a first simulated sound wave with a sound image shift includes: generating a second simulated sound wave based on the traveling information; and controlling, based on the second simulated sound wave, the at least two sound-emitting apparatuses to play the first simulated sound wave with the sound image shift.

In some possible implementations, the controlling, based on the second simulated sound wave, the at least two sound-emitting apparatuses to play the first simulated sound wave with the sound image shift includes: allocating a plurality of sound signals in the second simulated sound wave to at least two sound channels, and designing delays and/or gains for the at least two sound channels, to control, by using digital signal processor (digital signal processor, DSP) and/or a power amplifier, the at least two sound channels to play sounds based on the designed delays and/or gains. The sounds may form the first simulated sound wave with the sound image shift, and the at least two sound channels are implemented by using the at least two sound-emitting apparatuses.

With reference to the first aspect, in some implementations of the first aspect, the controlling, based on the second simulated sound wave, the at least two sound-emitting apparatuses to play the first simulated sound wave with the sound image shift includes: controlling the sound image shift direction and/or the sound image shift speed of the first simulated sound wave based on a fundamental frequency characteristic of the second simulated sound wave.

For example, the fundamental frequency characteristic indicates a magnitude of a fundamental frequency of the second simulated sound wave, and the fundamental frequency may be a fundamental tone frequency, or may be a primary frequency.

A "fundamental tone" may be a pure tone at a lowest frequency in each musical tone, and a frequency magnitude of the pure tone determines pitch of the entire tone. The primary frequency is used to represent a frequency that determines a timbre and pitch in audio, for example, a frequency that affects timbre richness in the audio. For example, if the first simulated sound wave is mainly played in a musical tone of a horn, the main frequency may range from 60 hertz to 600 hertz; or if the first simulated sound wave is mainly played in a musical tone of an electric bass, the main frequency may range from 80 hertz to 240 hertz.

In some possible implementations, the sound image shift speed is controlled based on the magnitude of the fundamental frequency.

With reference to the first aspect, in some implementations of the first aspect, the controlling the sound image shift direction of the first simulated sound wave based on a fundamental frequency characteristic of the second simulated sound wave includes: when the fundamental frequency characteristic indicates that the fundamental frequency of the second simulated sound wave gradually increases, controlling the sound image of the first simulated sound wave to shift from the rear of the carrier to the front of the carrier; or when the fundamental frequency characteristic indicates that the fundamental frequency of the second simulated sound wave gradually decreases, controlling the sound image of the first simulated sound wave to shift from the front of the carrier to the rear of the carrier.

It may be understood that, in the acceleration process of the carrier, the fundamental frequency of the second simulated sound wave (or the first simulated sound wave) gradually increases; and in the deceleration process of the carrier, the fundamental frequency of the second simulated sound wave (or the first simulated sound wave) gradually decreases.

In the foregoing technical solution, the sound image shift of the first simulated sound wave is controlled based on a related characteristic of the audio, so that the sound image shift can better match the actual audio, and a possibility of a large deviation between a traveling status of the carrier and the sound image shift can be effectively reduced.

With reference to the first aspect, in some implementations of the first aspect, the method further includes: controlling, based on the first simulated sound wave, a light display device in the cabin to display light.

In the foregoing technical solution, the light display device is linked to the sound-emitting apparatus, so that in the acceleration or deceleration process of the carrier, the user can experience a real-time status of the carrier in real time from two dimensions: an auditory sense and a visual sense, which helps improve driving and riding experience of the user at an entertainment level.

With reference to the first aspect, in some implementations of the first aspect, the controlling, based on the first simulated sound wave, a light display device in the cabin to display light includes: controlling, based on a fundamental frequency characteristic of the first simulated sound wave, a gradient direction and/or a gradient speed of the light displayed by the light display device.

In some possible implementations, the gradient direction of the light displayed by the light display device is controlled to be consistent with the sound image shift direction of the first simulated sound wave.

In some possible implementations, the light gradient speed is controlled to increase as the fundamental frequency increases, and decrease as a fundamental frequency decreases.

For example, the carrier is a vehicle. If the light display device is a light strip disposed at a door armrest of the vehicle, when the fundamental frequency characteristic indicates that a fundamental frequency of the first simulated sound wave gradually increases, the light gradient direction of the light display device is controlled to be from rear of the vehicle to front of the vehicle; or when the fundamental frequency characteristic indicates that a fundamental frequency of the first simulated sound wave gradually decreases, the light gradient direction of the light display device is controlled to be from front of the vehicle to rear of the vehicle. The foregoing light gradient may include but is not limited to sequential illumination of light beads, sequential extinguishing of the light beads, and light bead color gradient.

In the foregoing technical solution, the light gradient direction and/or speed of the light display device disposed at an eye-catching position of the carrier (for example, the door armrest of the vehicle) are/is controlled, so that when the sound-emitting apparatus plays the first simulated sound wave with the sound image shift, the light display device displays light that matches the first simulated sound wave, which improves sensation of the user for the acceleration or deceleration state of the carrier.

With reference to the first aspect, in some implementations of the first aspect, the controlling, based on the first simulated sound wave, a light display device in the cabin to display light includes: controlling, based on an energy characteristic of the first simulated sound wave, brightness of the light displayed by the light display device.

For example, greater energy that is of the first simulated sound wave and that is indicated by the energy characteristic indicates that the brightness of the light displayed by the light display device is controlled to be higher.

With reference to the first aspect, in some implementations of the first aspect, the method further includes: controlling at least one of a wind direction, wind force, and a temperature of an air conditioner in the cabin based on the first simulated sound wave.

In the foregoing technical solution, the air conditioner is linked to the sound-emitting apparatus, so that in the acceleration or deceleration process of the carrier, the user can experience the real-time status of the carrier in real time from two dimensions: the auditory sense and a somatic sense; or the air conditioner is linked to the sound-emitting apparatus and the light display device, so that in the acceleration or deceleration process of the carrier, the user can experience the real-time status of the carrier in real time from three dimensions: the auditory sense, the somatic sense, and the visual sense, which helps improve driving and riding experience of the user at an entertainment level.

With reference to the first aspect, in some implementations of the first aspect, the controlling at least one of a wind direction, wind force, and a temperature of an air conditioner in the cabin based on the first simulated sound wave includes: controlling the wind direction and/or the wind force of the air conditioner based on the fundamental frequency characteristic of the first simulated sound wave.

In some possible implementations, the wind force of the air conditioner is controlled based on the magnitude, of the fundamental frequency, indicated by the fundamental frequency characteristic. A larger fundamental frequency indicates larger wind force.

In some possible implementations, the wind direction of the air conditioner is controlled based on a fundamental frequency change indicated by the fundamental frequency characteristic. For example, if the fundamental frequency increases gradually, the wind direction of the air conditioner is controlled to be from the front of the carrier to the rear of the carrier; or if the fundamental frequency gradually decreases, the wind direction is controlled to be from the rear of the carrier to the front of the carrier.

With reference to the first aspect, in some implementations of the first aspect, the controlling at least one of a wind direction, wind force, and a temperature of an air conditioner in the cabin based on the first simulated sound wave includes: controlling the temperature of the air conditioner based on the energy characteristic of the first simulated sound wave.

For example, greater energy that is of the first simulated sound wave and that is indicated by the energy characteristic indicates that the temperature of the air conditioner is controlled to be higher.

With reference to the first aspect, in some implementations of the first aspect, the method further includes: controlling, based on the first simulated sound wave, a seat in the cabin to vibrate; and/or controlling, based on the first simulated sound wave, a steering wheel in the carrier to vibrate.

In some possible implementations, based on the first simulated sound wave, a seat at a driver position of the carrier may be controlled to vibrate. Alternatively, based on the first simulated sound wave, seats at a driver position and a position other than the driver position of the carrier may be controlled to vibrate.

In the foregoing technical solution, in the acceleration or deceleration process of the carrier, a vibration sense of a fuel vehicle is simulated to improve sensation of the user for the acceleration or deceleration state, which helps improve driving and riding experience of the user.

With reference to the first aspect, in some implementations of the first aspect, the controlling, based on the first simulated sound wave, a seat in the cabin to vibrate includes: controlling, based on a frequency characteristic of the first simulated sound wave, a frequency at which the seat vibrates.

For example, the frequency characteristic may include at least one of a Mel-scale frequency cepstral coefficient and a spectrum centroid. Further, the frequency at which the seat vibrates is controlled based on the Mel-scale frequency cepstral coefficient and/or the spectrum centroid of the first simulated sound wave.

According to a second aspect, a control method is provided. The method includes: obtaining traveling information of a carrier; and controlling, based on the traveling information, at least two sound-emitting apparatuses in a cabin of the carrier to play a first simulated sound wave with a sound image shift.

In the foregoing technical solution, in an acceleration or deceleration process of the carrier, the first simulated sound wave with sound image shift effect is played, so that noise that may increase annoyance of the user, such as tire noise, can be masked, and the user can experience, based on the sound image shift, that the carrier is in an acceleration or deceleration state. This helps improve human-machine interaction experience and driving and riding experience of the user, and can improve a sense of science and technology of the carrier.

With reference to the second aspect, in some implementations of the second aspect, the method further includes: controlling a sound image shift speed of the first simulated sound wave based on an acceleration magnitude of the carrier and/or an acceleration change rate of the carrier. The acceleration magnitude of the carrier and the acceleration change rate of the carrier are determined based on the traveling information.

With reference to the second aspect, in some implementations of the second aspect, he controlling at least two sound-emitting apparatuses in a cabin of the carrier to play a first simulated sound wave with a sound image shift includes: when the carrier is accelerating, controlling a sound image shift direction of the first simulated sound wave to be a first direction; or when the carrier is decelerating, controlling a sound image shift direction of the first simulated sound wave to be a second direction. The first direction and the second direction are opposite directions.

With reference to the second aspect, in some implementations of the second aspect, the first direction is from rear of the carrier to front of the carrier, and the second direction is from the front of the carrier to the rear of the carrier.

With reference to the second aspect, in some implementations of the second aspect, the first direction is an upward direction parallel to a normal direction of a plane on which the carrier is located, and the second direction is a downward direction parallel to the normal direction of the plane on which the carrier is located.

With reference to the second aspect, in some implementations of the second aspect, the method further includes: determining, based on the traveling information, that the carrier steers to a third direction. The controlling at least two sound-emitting apparatuses in a cabin of the carrier to play a first simulated sound wave with a sound image shift includes: controlling the sound image shift direction of the first simulated sound wave based on the acceleration magnitude and the third direction.

With reference to the second aspect, in some implementations of the second aspect, the controlling, based on the traveling information, at least two sound-emitting apparatuses in a cabin of the carrier to play a first simulated sound wave with a sound image shift includes: generating a second simulated sound wave based on the traveling information; and controlling, based on the second simulated sound wave, the at least two sound-emitting apparatuses to play the first simulated sound wave with the sound image shift.

With reference to the second aspect, in some implementations of the second aspect, the controlling, based on the second simulated sound wave, the at least two sound-emitting apparatuses to play the first simulated sound wave with the sound image shift includes: controlling the sound image shift direction and/or the sound image shift speed of the first simulated sound wave based on a fundamental frequency characteristic of the second simulated sound wave.

With reference to the second aspect, in some implementations of the second aspect, the controlling the sound image shift direction of the first simulated sound wave based on a fundamental frequency characteristic of the second simulated sound wave includes: when the fundamental frequency characteristic indicates that a fundamental frequency of the second simulated sound wave gradually increases, controlling a sound image of the first simulated sound wave to shift from the rear of the carrier to the front of the carrier; or when the fundamental frequency characteristic indicates that a fundamental frequency of the second simulated sound wave gradually decreases, controlling a sound image of the first simulated sound wave to shift from the front of the carrier to the rear of the carrier.

With reference to the second aspect, in some implementations of the second aspect, the method further includes: controlling, based on the first simulated sound wave, a light display device in the cabin to display light.

With reference to the second aspect, in some implementations of the second aspect, the controlling, based on the first simulated sound wave, a light display device in the cabin to display light includes: controlling, based on a fundamental frequency characteristic of the first simulated sound wave, a gradient direction and/or a gradient speed of the light displayed by the light display device.

With reference to the second aspect, in some implementations of the second aspect, the controlling, based on the first simulated sound wave, a light display device in the cabin to display light includes: controlling, based on an energy characteristic of the first simulated sound wave, brightness of the light displayed by the light display device.

With reference to the second aspect, in some implementations of the second aspect, the method further includes: controlling at least one of a wind direction, wind force, and a temperature of an air conditioner in the cabin based on the first simulated sound wave.

With reference to the second aspect, in some implementations of the second aspect, the controlling at least one of a wind direction, wind force, and a temperature of an air conditioner in the cabin based on the first simulated sound wave includes: controlling the wind direction and/or the wind force of the air conditioner based on the fundamental frequency characteristic of the first simulated sound wave.

With reference to the second aspect, in some implementations of the second aspect, the controlling at least one of a wind direction, wind force, and a temperature of an air conditioner in the cabin based on the first simulated sound wave includes: controlling the temperature of the air conditioner based on the energy characteristic of the first simulated sound wave.

With reference to the second aspect, in some implementations of the second aspect, the method further includes: controlling, based on the first simulated sound wave, a seat in the cabin to vibrate; and/or controlling, based on the first simulated sound wave, a steering wheel in the carrier to vibrate.

With reference to the second aspect, in some implementations of the second aspect, the controlling, based on the simulated sound wave, a seat in the cabin to vibrate includes: controlling, based on a frequency characteristic of the first simulated sound wave, a frequency at which the seat vibrates.

According to a third aspect, a control apparatus is provided. The apparatus includes an obtaining unit and a first processing unit. The obtaining unit is configured to obtain traveling information of a carrier, and the first processing unit is configured to: when the carrier accelerates or decelerates in response to an indication of a user in the carrier, control, based on the traveling information, at least two sound-emitting apparatuses in a cabin of the carrier to play a first simulated sound wave with a sound image shift.

With reference to the third aspect, in some implementations of the third aspect, the first processing unit is configured to control a sound image shift speed of the first simulated sound wave based on an acceleration magnitude of the carrier and/or an acceleration change rate of the carrier. The acceleration magnitude of the carrier and the acceleration change rate of the carrier are determined based on the traveling information.

With reference to the third aspect, in some implementations of the third aspect, the first processing unit is configured to: when the carrier is accelerating, control a sound image shift direction of the first simulated sound wave to be a first direction; or when the carrier is decelerating, control a sound image shift direction of the first simulated sound wave to be a second direction. The first direction and the second direction are opposite directions.

With reference to the third aspect, in some implementations of the third aspect, the first direction is from rear of the carrier to front of the carrier, and the second direction is from the front of the carrier to the rear of the carrier.

With reference to the third aspect, in some implementations of the third aspect, the apparatus further includes a second processing unit configured to determine, based on the traveling information, that the carrier steers to a third direction. The first processing unit is configured to control the sound image shift direction of the first simulated sound wave based on the acceleration magnitude and the third direction.

With reference to the third aspect, in some implementations of the third aspect, the apparatus further includes a generation unit, and the generation unit is configured to generate a second simulated sound wave based on the traveling information. The first processing unit is configured to control, based on the second simulated sound wave, the at least two sound-emitting apparatuses to play the first simulated sound wave with the sound image shift.

With reference to the third aspect, in some implementations of the third aspect, the first processing unit is configured to control the sound image shift direction and/or the sound image shift speed of the first simulated sound wave based on a fundamental frequency characteristic of the second simulated sound wave.

With reference to the third aspect, in some implementations of the third aspect, the first processing unit is configured to: when the fundamental frequency characteristic indicates that a fundamental frequency of the second simulated sound wave gradually increases, control a sound image of the first simulated sound wave to shift from the rear of the carrier to the front of the carrier; or when the fundamental frequency characteristic indicates that a fundamental frequency of the second simulated sound wave gradually decreases, control a sound image of the first simulated sound wave to shift from the front of the carrier to the rear of the carrier.

With reference to the third aspect, in some implementations of the third aspect, the apparatus further includes a third processing unit configured to control, based on the first simulated sound wave, a light display device in the cabin to display light.

With reference to the third aspect, in some implementations of the third aspect, the third processing unit is configured to control, based on a fundamental frequency characteristic of the first simulated sound wave, a gradient direction and/or a gradient speed of the light displayed by the light display device.

With reference to the third aspect, in some implementations of the third aspect, the third processing unit is configured to control, based on an energy characteristic of the first simulated sound wave, brightness of the light displayed by the light display device.

With reference to the third aspect, in some implementations of the third aspect, the apparatus further includes a fourth processing unit configured to control at least one of a wind direction, wind force, and a temperature of an air conditioner in the cabin based on the first simulated sound wave.

With reference to the third aspect, in some implementations of the third aspect, the fourth processing unit is configured to control the wind direction and/or the wind force of the air conditioner based on the fundamental frequency characteristic of the first simulated sound wave.

With reference to the third aspect, in some implementations of the third aspect, the fourth processing unit is configured to control the temperature of the air conditioner based on the energy characteristic of the first simulated sound wave.

With reference to the third aspect, in some implementations of the third aspect, the apparatus further includes a fifth processing unit configured to: control, based on the first simulated sound wave, a seat in the cabin to vibrate; and/or control, based on the first simulated sound wave, a steering wheel in the carrier to vibrate.

With reference to the third aspect, in some implementations of the third aspect, the fifth processing unit is configured to control, based on a frequency characteristic of the first simulated sound wave, a frequency at which the seat vibrates.

According to a fourth aspect, a control apparatus is provided. The apparatus includes an obtaining unit and a first processing unit. The obtaining unit is configured to obtain traveling information of a carrier, and the first processing unit is configured to control, based on the traveling information, at least two sound-emitting apparatuses in a cabin of the carrier to play a first simulated sound wave with a sound image shift.

According to a fifth aspect, a control apparatus is provided. The apparatus includes: a memory, configured to store a computer program; and a processor, configured to execute the computer program stored in the memory, to enable the apparatus to perform the method according to any possible implementation of the first aspect or the third aspect.

According to a sixth aspect, a control system is provided. The control system includes at least two sound-emitting apparatuses and a computing platform, and the computing platform includes the apparatus according to any possible implementation of the third aspect to the fifth aspect.

According to a seventh aspect, a carrier is provided. The carrier includes the apparatus according to any possible implementation of the third aspect to the fifth aspect and the at least two sound-emitting apparatuses; or the carrier includes the control system according to any possible implementation of the sixth aspect.

With reference to the seventh aspect, in some implementations of the seventh aspect, the carrier further includes the light display device and/or the air conditioner.

With reference to the seventh aspect, in some implementations of the seventh aspect, the carrier is a vehicle.

According to an eighth aspect, a computer program product is provided. The computer program product includes computer program code. When the computer program code is run on a computer, the computer is enabled to perform the method according to any possible implementation of the first aspect or the third aspect.

It should be noted that the computer program code may be completely or partially stored in a first storage medium. The first storage medium may be encapsulated with a processor, or may be encapsulated separately from a processor.

According to a ninth aspect, a computer-readable medium is provided. The computer-readable medium stores instructions. When the instructions are executed by a processor, the processor is enabled to implement the method according to any possible implementation of the first aspect or the third aspect.

According to a tenth aspect, a chip is provided. The chip includes a circuit, and the circuit is configured to perform the method according to any possible implementation of the first aspect or the third aspect.

In embodiments of this application, in an acceleration or deceleration process of a carrier, a simulated sound wave with sound image shift effect is played, so that noise that may increase annoyance of a user, such as tire noise, can be masked, and the user can experience, based on a sound image shift, that the carrier is in an acceleration or deceleration state. This helps improve human-machine interaction experience and driving and riding experience of the user, and can improve a sense of science and technology of the carrier. Specifically, a sound image shift direction and/or a sound image shift speed of the simulated sound wave may be controlled based on an actual acceleration of the carrier, so that the simulated sound wave better matches an actual running status of the carrier, and a sense of science and technology of the carrier and driving and riding experience of the user are improved. When the carrier is separately accelerating and decelerating, a sound image of the simulated sound wave is controlled to shift in opposite directions, so that the user can clearly determine a motion status of the carrier based on the sound image shift direction, which helps improve driving and riding experience of the user. Further, on a premise that the sound image shift is controlled based on the acceleration, steering information of the carrier is introduced to control the sound image shift direction, so that the carrier is more intelligent, interaction between the user and the carrier is improved, and driving and riding experience of the user is improved. In addition, one or more of a light display device, an air conditioner, a seat, and a steering wheel may be further controlled based on the simulated sound wave to be linked to a sound-emitting apparatus, to form audio-lighting effect, audio-vibration effect, and audio-wind effect, so that the user experiences, from a plurality of dimensions, the simulated sound wave that changes with a speed of the carrier. For example, the light display device is linked to the sound-emitting apparatus, so that in the acceleration or deceleration process of the carrier, the user can experience a real-time status of the carrier in real time from two dimensions: an auditory sense and a visual sense, which helps improve driving and riding experience of the user at an entertainment level. A light gradient direction and/or speed of the light display device disposed at an eye-catching position of the carrier (for example, a door armrest of a vehicle) are/is controlled based on the simulated sound wave, so that when the sound-emitting apparatus plays the simulated sound wave with the sound image shift, the light display device displays light that matches the simulated sound wave, which improves sensation of the user for the acceleration or deceleration state of the carrier. The air conditioner is linked to the sound-emitting apparatus, so that in the acceleration or deceleration process of the carrier, the user can experience the real-time status of the carrier in real time from two dimensions: the auditory sense and a somatic sense; or the air conditioner is linked to the sound-emitting apparatus and the light display device, so that in the acceleration or deceleration process of the carrier, the user can experience the real-time status of the carrier in real time from three dimensions: the auditory sense, the somatic sense, and the visual sense. In the acceleration or deceleration process of the carrier, a vibration sense of a fuel vehicle is simulated to improve sensation of the user for the acceleration or deceleration state, which further helps improve driving and riding experience of the user.

### BRIEF DESCRIPTION OF DRAWINGS

FIG. 1 is a functional block diagram of a vehicle according to an embodiment of this application;
FIG. 2 is a diagram of sound channels distributed in a cabin according to an embodiment of this application;
FIG. 3 is a block diagram of a system architecture required for implementing a control method according to an embodiment of this application;
FIG. 4 is a schematic flowchart of a control method according to an embodiment of this application;
FIG. 5 is a diagram of distribution of a sound-emitting apparatus according to an embodiment of this application;
FIG. 6(a) to FIG. 6(d) are a diagram of an application scenario of a control method according to an embodiment of this application;
FIG. 7 is a diagram of an application scenario of a control method according to an embodiment of this application;
FIG. 8 is a block diagram of a control apparatus according to an embodiment of this application; and
FIG. 9 is another block diagram of a control apparatus according to an embodiment of this application.

### DESCRIPTION OF EMBODIMENTS

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, at least one means one or more, and a plurality of means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Prefixes such as "first" and "second" in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefixes should not constitute a redundant limitation.

In the field of new energy vehicles represented by electric vehicles, due to wide application of electric assemblies and progress of an NVH technology, a vehicle cabin is increasingly quiet. Due to lack of sounds such as a roar of an engine, negative vehicle use experience related to the sound occurs. Due to lack of masking of the sounds such as the roar of the engine, in a traveling process of the vehicle, a user in the cabin may hear a high-frequency sound generated when a motor runs, and tire noise that may be heard in the cabin is clearer, which increases annoyance of the user. A sound used to highlight strength of a power system of the vehicle disappears, which may weaken sensation of the user for vehicle performance. It is difficult for the user to identify a dynamic vehicle condition (for example, a speed or load) of the vehicle through a sound, which weakens human-vehicle interaction experience of the user.

In view of this, this application provides a control method and apparatus, and a carrier. In an acceleration or deceleration process of the carrier, a simulated sound wave with sound image shift effect can be played, so that noise that may increase annoyance of a user, such as tire noise, can be masked, and the user can experience, based on a sound image shift, that the carrier is in an acceleration or deceleration state. This helps improve human-machine interaction experience and driving and riding experience of the user, and can improve a sense of science and technology of the carrier. Further, at least one of a light display device, an air conditioner, a seat, and a steering wheel may be further controlled based on the simulated sound wave. In this way, a sound-emitting apparatus is linked to the light display device, the air conditioner, the seat, and the steering wheel, to form audio-lighting effect, audio-vibration effect, and audio-wind effect, so that the user experiences, from a plurality of dimensions, the simulated sound wave that changes with a speed of the carrier.

The following describes technical solutions of embodiments in this application with reference to accompanying drawings.

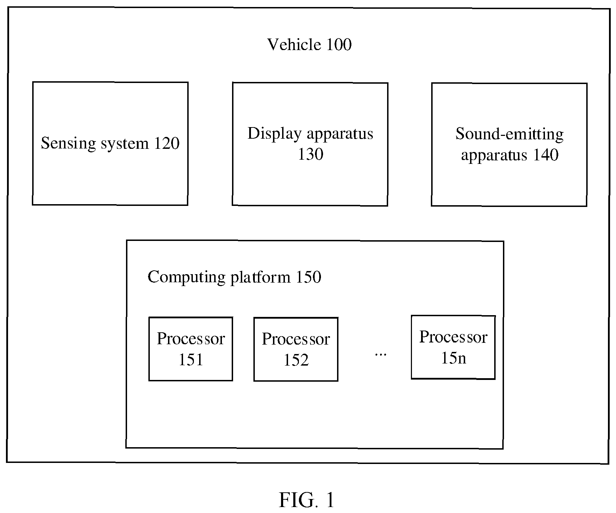

FIG. 1 is a functional block diagram of a vehicle 100 according to an embodiment of this application. The vehicle 100 may include a sensing system 120, a display apparatus 130, a sound-emitting apparatus 140, and a computing platform 150. The sensing system 120 may include one or more types of sensors that sense surrounding environment information of the vehicle 100. For example, the sensing system 120 may include one or more of a positioning system, an inertia measurement unit (inertial measurement unit, IMU), a lidar, a millimeter-wave radar, an ultrasonic radar, a visual sensor, and a camera apparatus. The positioning system may be a global positioning system (global positioning system, GPS), or may be a BeiDou system or another positioning system.

The sensing system 120 may further include one or more of a pedal position sensor, a speed sensor (for example, a wheel speed sensor), and a torque sensor.

The display apparatus 130 in this embodiment of this application mainly includes a light display device configured to display light. For example, the light display device may be a breathing light or an atmosphere light including a light-emitting diode (light-emitting diode, LED) light strip, and the LED light strip (briefly referred to as a light strip below) may include a plurality of LED light beads. Alternatively, the light display device may be another type of light. Alternatively, the light display device may be disposed on a vehicle-mounted display, for example, a display in a central control area, or a rear-view mirror display, or may be disposed on a display at the back of a front-row seat headrest or on a front-row central armrest. Alternatively, the light display device may further include a vehicle-mounted display or the front-up display (head-up display, HUD), or may further include another device that can display light.

In some possible implementations, when a carrier is a vehicle, the light display device may further include a front light, a rear light, a brake light, or the like of the vehicle.

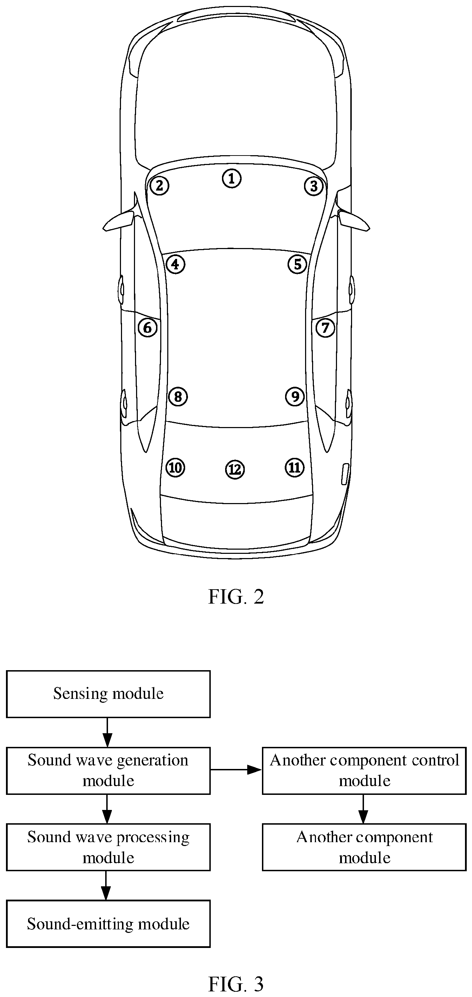

The sound-emitting apparatus 140 may implement one or more sound channels in a cabin and/or one or more sound channels out of the cabin, where one sound channel is implemented by one or more sound-emitting apparatuses (such as loudspeakers or sound boxes). FIG. 2 is a diagram of sound channels distributed in a cabin according to an embodiment of this application. As shown in FIG. 2, the cabin may include seven surround sound channels: a center (center, C) sound channel ①, a front left (front left, FL) sound channel ②, a front right (front right, FR) sound channel ③, a surround left (surround left, SL) sound channel ⑥, a surround right (surround right, SR) sound channel ⑦, a surround back left (surround back left, SBL) sound channel ⑩, and a surround back right (surround back right, SBR) sound channel ⑪; four sky sound channels: a top front left (top front left, TFL) sound channel ④, a top front right (top front right, TFR) sound channel ⑤, and a top rear left (top rear left, TRL) sound channel ⑧, and a top rear right (top rear right, TRR) sound channel ⑨; and a subwoofer (subwoofer, SW) sound channel ⑫.

Some or all functions of the vehicle 100 may be controlled by the computing platform 150. The computing platform 150 may include processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a DSP. In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory and execute the instructions, to implement a corresponding function.

In this embodiment of this application, the processor may obtain traveling information from the sensing system 120, where the traveling information includes one or more of pedal opening information, speed information, and steering wheel torque information; synthesize a simulated sound wave based on the traveling information; and control the sound-emitting apparatus 140 to play the simulated sound wave. The processor may further control another component in the cabin based on the simulated sound wave. For example, the processor may control, based on the simulated sound wave, the display apparatus 130 to display the light, or control an air flow of an air conditioning system based on the simulated sound wave, or control, based on the simulated sound wave, a seat and/or a steering wheel to vibrate. In some possible implementations, the simulated sound wave may alternatively be stored in the memory in the computing platform 150 in a form of data.

It should be understood that the foregoing operations may be performed by a same processor, or may be performed by one or more processors. This is not specifically limited in embodiments of this application.

FIG. 3 is a diagram of a system architecture of a control method according to an embodiment of this application. The system includes a sensing module, a sound wave generation module, a sound wave processing module, a sound-emitting module, another component control module, and another component module. For example, the sensing module may include one or more sensors in the sensing system 120 shown in FIG. 1, for example, may include one or more of the pedal position sensor, the speed sensor, and the torque sensor. The sound-emitting module may include the sound wave generation module, the sound wave processing module, and the another component control module, and may include one or more processors in the computing platform 150 shown in FIG. 1. The another component module may include one or more light display devices in the display apparatus 130 shown in FIG. 1, and the another component module may further include one or more of a seat, a steering wheel, and an air conditioner. The sound wave generation module may synthesize a simulated sound wave based on a data signal obtained from the sensing module, where the data signal includes one or more of a pedal opening signal, a speed signal, and a torque signal. The sound wave processing module may obtain the simulated sound wave generated by the sound wave generation module, perform sound channel allocation based on the simulated sound wave to control the sound-emitting module to play a sound, and perform delay control and gain control on a sound played by each sound channel, so that the sound played by the sound-emitting module can form three-dimensional flow effect. The another component control module may obtain the simulated sound wave generated by the sound wave generation module, and extract audio characteristics from audio data of the simulated sound wave, for example, extract one or more of the following characteristics of the audio data: an energy characteristic, such as root mean square energy; a time domain characteristic, such as voice onset time (voice onset time, VOT); a frequency characteristic, such as a Mel-scale frequency cepstral coefficient (Mel-scale frequency cepstral coefficient, MFCC) or a spectral centroid; and a musical characteristic, such as a fundamental tone frequency. Further, the another component control module may control, based on one or more of the foregoing characteristics, the another component module to be linked to the simulated sound wave, where the another component module includes one or more of the light display device, the air conditioner, the seat, and the steering wheel.

It should be understood that the foregoing modules and apparatus are merely examples. In actual application, the foregoing modules and apparatus may be added or deleted according to an actual requirement. In an example, the sound wave generation module and the sound wave processing module in FIG. 3 may be combined into one module. In other words, functions of the two modules are implemented by one module.

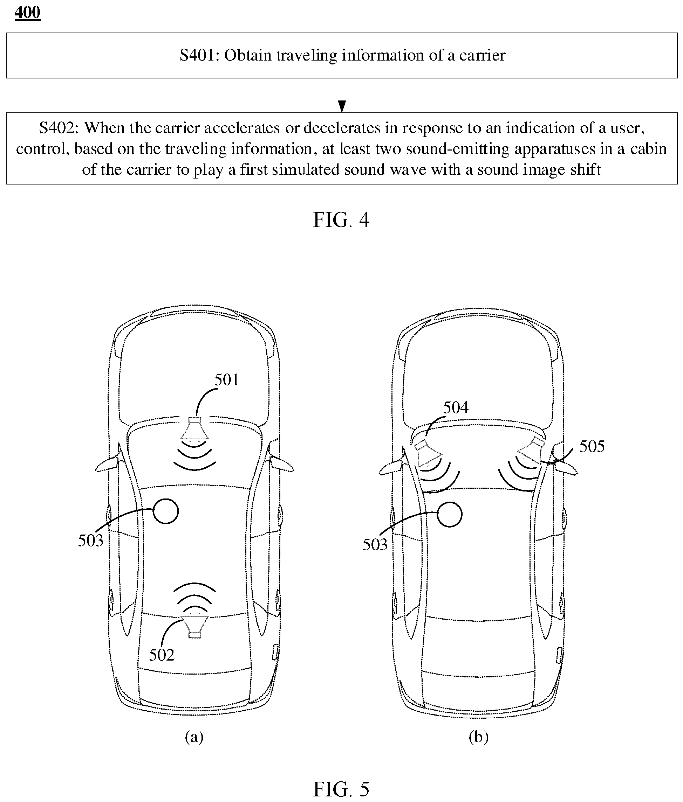

FIG. 4 is a schematic flowchart of a control method according to an embodiment of this application. The method may be applied to the vehicle 100 shown in FIG. 1, or may be performed by the system shown in FIG. 3. This is not specifically limited in embodiments of this application. Specifically, the method 400 may include the following steps.

S401: Obtain traveling information of a carrier.

For example, the traveling information may include but is not limited to acceleration information, speed information, and steering wheel torque information.

In some possible implementations, a first opening signal of a first pedal may be obtained, and the acceleration information of the carrier may be determined based on the first opening signal.

For example, the first pedal may be an accelerator pedal, or may be a brake pedal.

In some possible implementations, the acceleration information may alternatively be determined based on the speed information of the carrier, or may be determined based on another signal. This is not specifically limited in embodiments of this application.

**In** some possible implementations, the traveling information further includes gear information of the carrier.

S402: When the carrier accelerates or decelerates in response to an indication of a user in the carrier, control, based on the traveling information, at least two sound-emitting apparatuses in a cabin of the carrier to play a first simulated sound wave with a sound image shift.

Optionally, the first simulated sound wave may include at least one of the following: a simulated sound of a fuel vehicle engine, a simulated sound of an aircraft engine, a simulated sound of a spaceship, a simulated sound of wind, and a simulated sound of an animal.

**In** an example, in a traveling process of the carrier, when the carrier accelerates or decelerates in response to the indication of the user, an acceleration magnitude and/or an acceleration change rate in an acceleration or deceleration process may be determined based on the traveling information, to control, based on the acceleration magnitude and/or the acceleration change rate, the at least two sound-emitting apparatuses to play the first simulated sound wave with the sound image shift.

In another example, when the traveling information indicates that the carrier is in park or neutral, an opening signal of the accelerator pedal is detected, and the at least two sound-emitting apparatuses may be controlled, based on the opening signal of the accelerator pedal, to play the first simulated sound wave with the sound image shift.

In some possible implementations, "control, based on the traveling information, at least two sound-emitting apparatuses in a cabin of the carrier to play a first simulated sound wave with a sound image shift" includes: controlling, based on the traveling information, a first sound channel of the cabin of the carrier to play a first sound, and controlling a second sound channel of the cabin to play a second sound, where the first simulated sound wave includes the first sound and the second sound, and a sound image formed by the first sound and the second sound shifts from a first position of the cabin to a second position. The first sound channel and the second sound channel are implemented by the at least two sound-emitting apparatuses.

For example, the first sound channel (and/or the second sound channel) may be one of the sound channels shown in FIG. 2.

For example, the shift of the sound image from the first position to the second position may be implemented based on binaural effect. For example, based on the binaural effect and through the first sound played by the first sound channel and the second sound played by the second sound channel, a listener (for example, a user at a driver position) senses that a sound image center shifts from the first position to the second position.

As shown in (a) in FIG. 5, for example, the first sound channel and the second sound channel are implemented by a loudspeaker 501 and a loudspeaker 502 respectively. In this case, play delays and/or sound wave gains of the first sound and the second sound are designed based on the binaural effect, so that a user 503 at a driver position can sense that the sound image shifts from front of the vehicle to rear of the vehicle, or from rear of the vehicle to front of the vehicle. As shown in (b) in FIG. 5, for example, the first sound channel and the second sound channel are implemented by a loudspeaker 504 and a loudspeaker 505 respectively. In this case, play delays and/or sound wave gains of the first sound and the second sound are designed based on Doppler effect, so that a user 503 at a driver position can sense that the sound image shifts from left to right or from right to left.

In some possible implementations, a sound image shift direction is controlled based on the acceleration magnitude. For example, when the carrier is accelerating, the sound image shift direction of the first simulated sound wave is controlled to be a first direction; or when the carrier is decelerating, the sound image shift direction of the first simulated sound wave is controlled to be a second direction. The first direction and the second direction are opposite directions.

For example, the acceleration magnitude is determined based on the first opening signal of the first pedal. If the first pedal is an accelerator pedal, and the first opening signal is greater than zero, the first position may be a position of the rear of the vehicle, and the second position may be a position of the front of the vehicle. If the first pedal is a brake pedal, and the first opening signal is greater than zero, the first position may be a position of the front of the vehicle, and the second position may be a position of the rear of the vehicle. The foregoing first position and the second position are merely examples for description. In a specific implementation process, the first position and the second position may alternatively be other positions. This is not specifically limited in embodiments of this application.

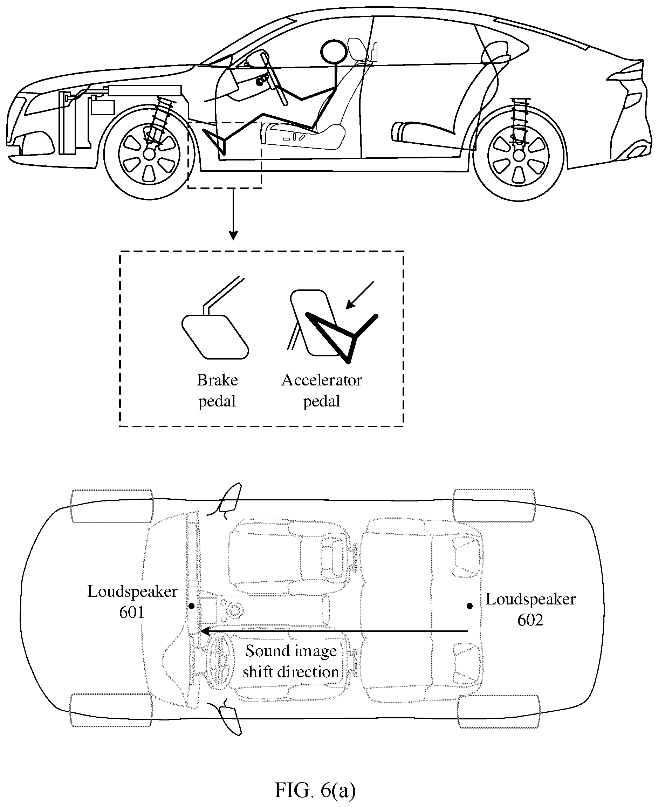

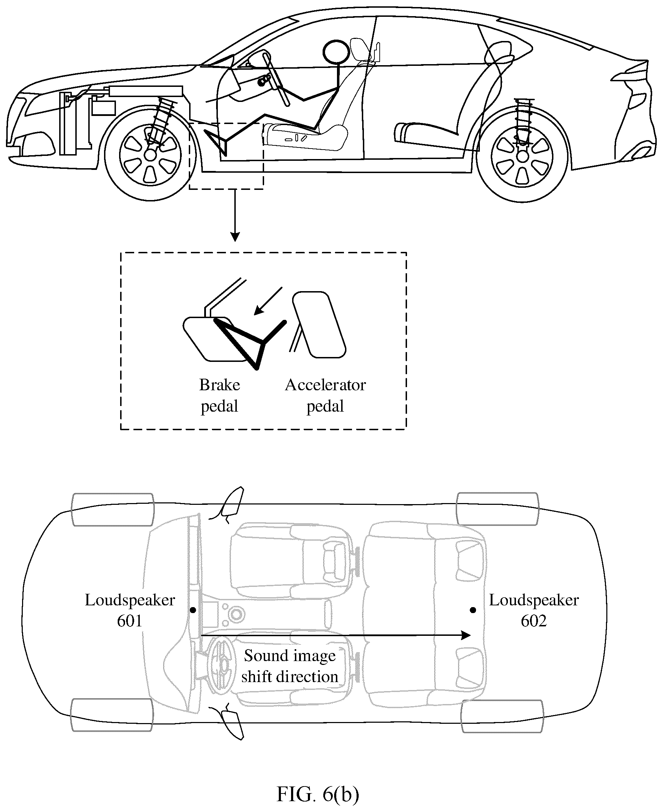

For example, the carrier is a vehicle. As shown in FIG. 6(a), when the vehicle accelerates in response to an indication generated by a user by stepping on an accelerator pedal, a loudspeaker 601 and a loudspeaker 602 are controlled to play the first simulated sound wave with a sound image shifting from rear of the vehicle to front of the vehicle. As shown in FIG. 6(b), when the vehicle decelerates in response to an indication generated by a user by stepping on a brake pedal, a loudspeaker 601 and a loudspeaker 602 are controlled to play the first simulated sound wave with a sound image shifting from front of the vehicle to rear of the vehicle.

It should be noted that, when an opening signal of the accelerator pedal is not zero, a speed of the vehicle may be zero (that is, the vehicle is in a parked state), or may not be zero (that is, the vehicle is in a traveling state).

In some possible implementations, the traveling information further includes steering wheel torque information, and it may be determined, based on the traveling information, that the carrier steers leftward or rightward. Further, controlling the sound image shift direction of the first simulated sound wave based on the acceleration magnitude includes: controlling the sound image shift direction of the first simulated sound wave based on the acceleration magnitude and a steering direction of the carrier.

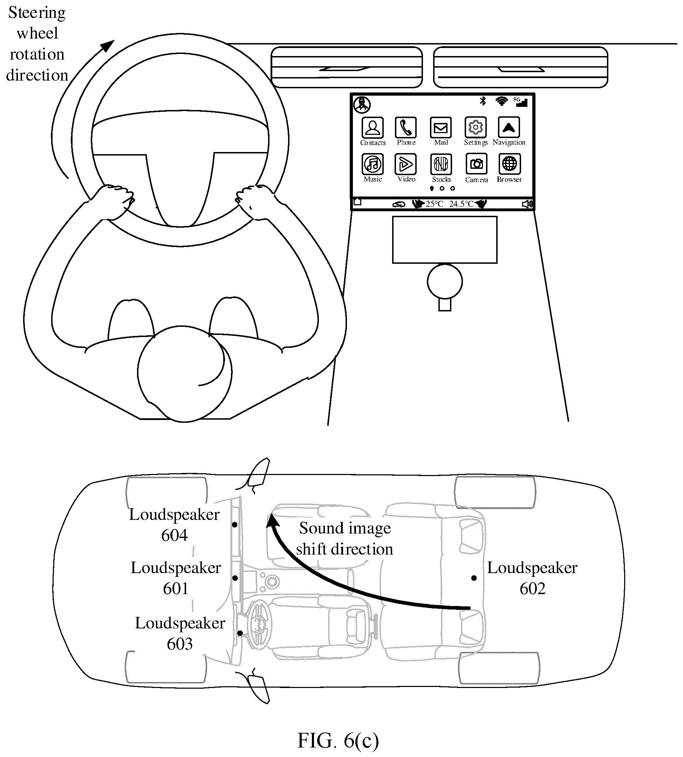

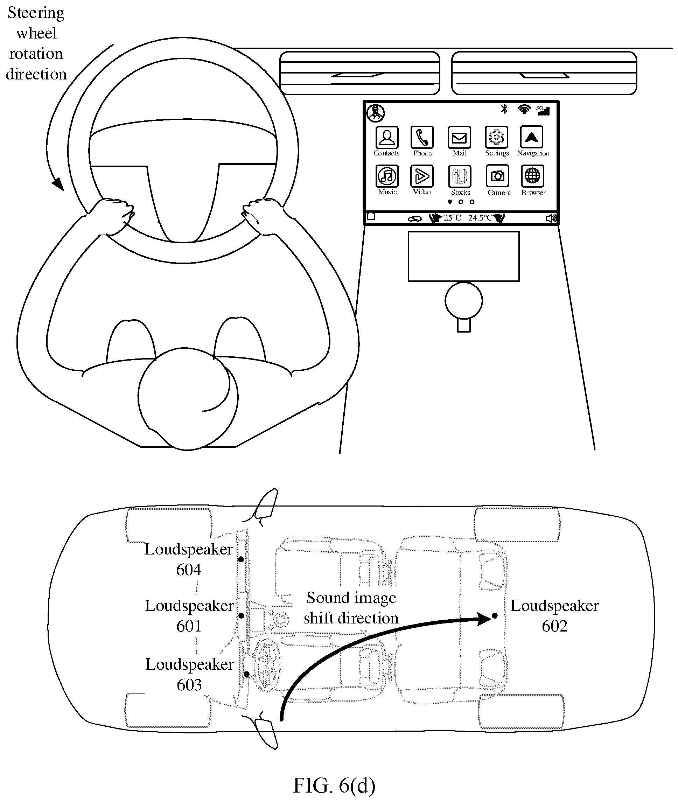

For example, the carrier is a vehicle. As shown in FIG. 6(c), in an acceleration process of the vehicle, the user rotates a steering wheel clockwise, so that the vehicle steers rightward. In this case, loudspeakers 601 to 604 are controlled to play the first simulated sound wave with the sound image shifting from the rear of the vehicle to the front of the vehicle and gradually deflecting rightward in a shift process. As shown in FIG. 6(d), in a deceleration process of the vehicle, the user rotates a steering wheel counter-clockwise, so that the vehicle steers leftward. In this case, loudspeakers 601 to 604 are controlled to play the first simulated sound wave with the sound image shifting from a left side of the front of the vehicle to the rear of the vehicle. Alternatively, in an acceleration process of the vehicle, the user rotates a steering wheel clockwise, so that the vehicle steers rightward. In this case, at least two sound-emitting apparatuses may alternatively be controlled to play the first simulated sound wave with the sound image shifting from the rear of the vehicle to the front of the vehicle on a right side of the user at the driver position. In a deceleration process of the vehicle, the user rotates a steering wheel counter-clockwise, so that the vehicle steers leftward. In this case, at least two sound-emitting apparatuses may alternatively be controlled to play the first simulated sound wave with the sound image shifting from the front of the vehicle to the rear of the vehicle on a left side of the user at the driver position.

It should be understood that positions and quantities of the loudspeakers shown in FIG. 6(a) to FIG. 6(d) are merely examples for description. In a specific implementation process, sound-emitting apparatuses at different positions and/or of different quantities may be used to control play of the first simulated sound wave. This is not specifically limited in embodiments of this application.

In some possible implementations, a sound image shift speed is controlled based on the acceleration change rate. For example, a larger acceleration change rate indicates a higher sound image shift speed.

In some possible implementations, a second simulated sound wave is generated based on the traveling information. The second simulated sound wave includes the first sound and the second sound, and the first simulated sound wave with the sound image shift is controlled, based on the second simulated sound wave, to be played.

In some possible implementations, the second simulated sound wave may alternatively be generated based on an acceleration of the carrier and a speed of the carrier. For example, a fundamental tone frequency of the second simulated sound wave may be determined based on a speed magnitude, and an amplitude of the second simulated sound wave may be determined based on the acceleration magnitude.

For example, a real-time second simulated sound wave (or first simulated sound wave) may be generated through calculation based on a simulated sound wave algorithm, such as a sample synthesis algorithm, a granular synthesis algorithm, or an order synthesis algorithm.

In some possible implementations, a plurality of sound signals in the second simulated sound wave are allocated to the first sound channel and the second sound channel, and delays and/or gains are designed for the first sound channel and the second sound channel, to control, by using digital signal processor (digital signal processor, DSP) and/or a power amplifier, the first sound channel and the second sound channel to play sounds based on the designed delays and/or gains. The sounds may form the first simulated sound wave with the sound image shift, and the first sound channel and the second sound channel may be implemented by using the at least two sound-emitting apparatuses.

For example, possible design manners of the first sound channel and the second sound channel are described with reference to the sound channels shown in FIG. 2. The first sound channel and the second sound channel may be an FL sound channel and an SL sound channel respectively, or the first sound channel and the second sound channel may be FL and SBL respectively. In some possible implementations, alternatively, the first sound channel and the second sound channel may each include a plurality of sound subchannels. For example, the first sound channel includes FL, FR, and C, and the second sound channel includes SL and SR (or SBL and SBR); or the first sound channel includes FL, and the second sound channel includes SL and SBL; or the first sound channel includes FL and FR, and the second sound channel includes SBL and SBR. In the foregoing case, play delay and/or level gain control may be performed on the first sound channel and the second sound channel, so that a sound image of the sounds played by the first sound channel and the second sound channel can shift in a direction parallel to a longitudinally symmetrical plane of the carrier. Further, based on a principle of the Doppler effect, sound components played by the first sound channel and the second sound channel may be adjusted, so that sound image shift effect sensed by the user is more realistic. For example, when the first sound channel includes the FL, and the second sound channel includes the SL and the SBL, if the sound image shift direction is from the SBL to the FL, high-frequency sound components in the SBL, SL, and FL sound channels may be adjusted to become less.

In some possible implementations, the first sound channel and the second sound channel may alternatively be FL and FR respectively, or the first sound channel and the second sound channel may be SL and SR respectively. Alternatively, the first sound channel and the second sound channel may each include a plurality of sound subchannels. For example, the first sound channel includes FL and SL, and the second sound channel includes FR and SR; or the first sound channel includes FL, SL, and SBL, and the second sound channel includes FR, SR, and SBR. In the foregoing case, play delay and/or level gain control may be performed on the first sound channel and the second sound channel, so that a sound image of the sounds played by the first sound channel and the second sound channel can shift in a direction perpendicular to a longitudinally symmetrical plane of the carrier.

For example, to enable the simulated sound wave to implement effect of shifting in the direction parallel to the longitudinally symmetrical plane of the carrier, a delay and a level gain of each sound channel shown in FIG. 2 may be designed, which may be specifically shown in Table 1. t may be 0 milliseconds (milliseconds, ms), tₐ to t_{d} may be specific values in 3 milliseconds to 20 milliseconds, and specific data may be determined based on a sound wave shift speed that needs to be implemented. A specific value of a level gain g may be determined based on an amplitude of the simulated sound wave. gₐ to g_{d} may be specific values in 0 decibels (decibels, dB) to 15 decibels, and may be specifically determined based on the sound wave shift speed that needs to be implemented.

**Table 1 Table of a relationship between a delay and a level gain of each sound channel of a vehicle**

| | | | | | | | | | | | | |
|---|---|---|---|---|---|---|---|---|---|---|---|---|
| Sound channel | FL | C | FR | SL | SR | SBL | SBR | TFL | TFR | FRL | TRR | SW |
| Delay/ms | t | t | t | t+tₐ | t+tₐ | t+tₐ++t_{b} | t+tₐ+t_{b} | t+t_{c} | t+t_{c} | t+t_{d} | t+t_{d} | t |
| Gain/dB | g | g | g | g-gₐ | g-gₐ | g-gₐ- g_{b} | g-gₐ- g_{b} | g-g_{c} | g-g_{c} | g-g_{d} | g-g_{d} | g |

It should be understood that the delay and level gain designs shown in Table 1 are merely examples for description. In a specific implementation process, required sound channels may include only at least two of the sound channels, for example, may include the FL, the SL, and the SBL, the FL and the SL, or the FL and the SBL. Alternatively, sound wave shift effect may be implemented through delay and level gain designs in other forms. This is not specifically limited in embodiments of this application.

In some possible implementations, a magnitude of a fundamental frequency of the first simulated sound wave may be determined based on an opening magnitude, and a change rate of the fundamental frequency of the first simulated sound wave may be determined based on an opening change rate.

In some possible implementations, the carrier may store a mapping relationship between the indication of the user and the sound-emitting apparatus (or sound channel), and the method further includes: determining the at least two sound-emitting apparatuses (or sound channels) based on the mapping relationship and the traveling information.

In an example, when the carrier only accelerates or decelerates in response to the indication of the user, the FL, the SL, and the SBL are controlled to play the first simulated sound wave, and the sound image of the first simulated sound wave shifts in the direction parallel to the longitudinally symmetrical plane of the carrier; or the FL, SL, SBL, FR, SR and the SBR are controlled to play the first simulated sound wave, and the sound image of the first simulated sound wave shifts in the direction parallel to the longitudinally symmetrical plane of the carrier.

In another example, when the carrier steers rightward in the acceleration process in response to the indication of the user, the FL, the C, the FR, the SL, and the SBL may be controlled to play the first simulated sound wave with the sound image shifting from the rear of the vehicle to the front of the vehicle and gradually deflecting rightward in a shift process. When the carrier steers leftward in the acceleration process in response to the indication of the user, the FL, the C, the FR, the SL, and the SBL may be controlled to play the first simulated sound wave with the sound image shifting from the rear of the vehicle to the front of the vehicle and gradually deflecting leftward in a shift process. When the carrier steers rightward in the deceleration process in response to the indication of the user, the FL, the C, the FR, the SL, and the SBL may be controlled to play the first simulated sound wave that shifts from a right side of the front of the vehicle to the rear of the vehicle. When the carrier steers leftward in the deceleration process in response to the indication of the user, the FL, the C, the FR, the SL, and the SBL may be controlled to play the first simulated sound wave that shifts from the left side of the front of the vehicle to the rear of the vehicle.

In some possible implementations, a light display device in the cabin is controlled, based on the first simulated sound wave, to display light.

Optionally, a fundamental frequency characteristic of the first simulated sound wave is determined, and a light gradient direction and/or a light gradient speed of the light display device are/is controlled based on the fundamental frequency characteristic. The fundamental frequency characteristic indicates the magnitude of the fundamental frequency and/or a change status of the magnitude of the fundamental frequency. In an example, the light gradient speed increases as the fundamental frequency increases, and decreases as a fundamental frequency decreases. In another example, if the light display device is a light strip disposed at a door armrest of the vehicle, when the fundamental frequency characteristic indicates that the fundamental frequency of the first simulated sound wave gradually increases, the light gradient direction of the light display device is controlled to be from rear of the carrier to front of the carrier; or when the fundamental frequency characteristic indicates that the fundamental frequency of the first simulated sound wave gradually decreases, the light gradient direction of the light display device is controlled to be from front of the carrier to rear of the carrier. The foregoing light gradient may include but is not limited to sequential illumination of light beads, sequential extinguishing of the light beads, and light bead color gradient. It may be understood that, in the acceleration process of the carrier, a fundamental frequency of a formed simulated sound wave gradually increases; and in the deceleration process of the carrier, the fundamental frequency of the formed simulated sound wave gradually decreases.

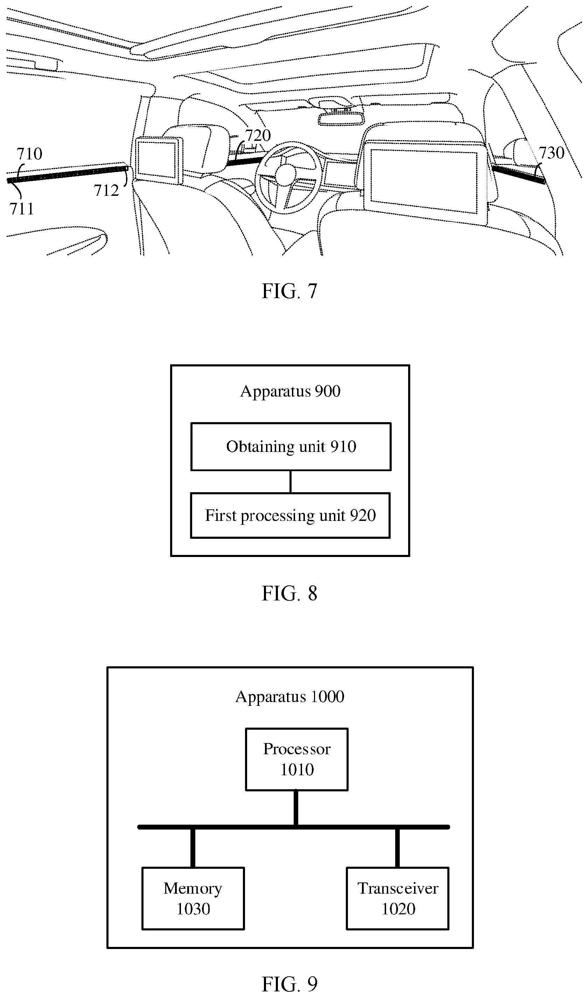

For example, the carrier is a vehicle. The light display device includes a light strip disposed at a door armrest of the vehicle, for example, a light strip 710, a light strip 720, and a light strip 730 shown in FIG. 7. Each light strip includes a plurality of light beads. The light strip 710 is used as an example to describe the light gradient direction of the light display device. When the fundamental frequency characteristic indicates that the fundamental frequency of the simulated sound wave gradually decreases, a light gradient direction of the light strip may be from a light bead 712 to a light bead 711. When the fundamental frequency characteristic indicates that the fundamental frequency of the simulated sound wave gradually increases, a light gradient direction of the light strip may be from a light bead 711 to a light bead 712. A speed at which light changes may be reflected by duration. For example, shorter duration required for sequential illumination from the light bead 712 to the light bead 711 indicates a faster speed at which the light changes.

In some implementations, dynamic effect formed by the light in a time dimension may be reflected by time at which the light strip 710 to the light strip 730 display the light. In an example, light strips on two sides of the vehicle may be controlled to simultaneously display light. For example, the light strip 710 and the light strip 730 simultaneously display light. In another example, light strips on one side of the vehicle may be controlled to sequentially display light. For example, the light strip 710 and the light strip 720 are controlled to sequentially display light. For example, after the light strip 710 displays light, the light strip 720 displays light.

Optionally, an energy characteristic of the first simulated sound wave is determined, and light brightness of the light display device is controlled based on the energy characteristic. For example, the energy characteristic indicates a magnitude of root mean square energy (briefly referred to as energy below) of the simulated sound wave, or may further indicate a change status of the magnitude of the root mean square energy. For example, greater energy of the simulated sound wave indicates higher light brightness.

In some possible implementations, one or more of a wind direction, a wind exhaust flow volume, and a temperature of an air conditioner in the cabin are controlled based on the first simulated sound wave.

Optionally, the wind direction and/or the wind exhaust flow volume of the air conditioner are/is controlled based on the fundamental frequency characteristic of the first simulated sound wave. In an example, if the fundamental frequency of the first simulated sound wave gradually increases, the wind direction is controlled to be a third direction; or if the fundamental frequency of the first simulated sound wave gradually decreases, the wind direction is controlled to be a fourth direction. In another example, the wind exhaust flow volume increases as the fundamental frequency increases, and decreases as the fundamental frequency decreases.

For example, the third direction may be from the rear of the carrier to the front of the carrier, and the fourth direction may be from the front of the carrier to the rear of the carrier.

Optionally, the temperature of the air conditioner is controlled based on the energy characteristic of the simulated sound wave. For example, greater energy that is of the simulated sound wave and that is indicated by the energy characteristic indicates a higher temperature of the air conditioner.

In some possible implementations, a seat and/or a steering wheel are/is controlled, based on the simulated sound wave, to vibrate. For example, a vibrator disposed on and connected to the seat of the vehicle may be used to control the seat to vibrate, and a vibrator disposed on the steering wheel may be used to control the steering wheel to vibrate. For example, a frequency at which the seat vibrates and/or a frequency at which the steering wheel vibrates may be controlled based on a frequency characteristic of the simulated sound wave.

For example, the frequency characteristic may include at least one of an MFCC and a spectrum centroid. Further, the frequency at which the seat vibrates is controlled based on the MFCC and/or the spectrum centroid of the first simulated sound wave. It is considered that the frequency at which the seat vibrates is mostly in a low frequency range (below 50 hertz), and the first simulated sound wave may have a part whose frequency is far higher than 50 hertz. In this case, the MFCC of the first simulated sound wave may be mapped to a frequency range in which the seat vibrates, to control the seat to vibrate based on a mapped frequency. For example, if an MFCC range of the first simulated sound wave is 1 Mel to 5000 Mel (Mel means a Mel scale), 1 Mel to 1000 Mel may be mapped to a range of 1 hertz to 10 hertz in which the seat vibrates, 1001 Mel to 2000 Mel may be mapped to a range of 11 hertz to 20 hertz in which the seat vibrates, 2001 Mel to 3000 Mel may be mapped to a range of 21 hertz to 30 hertz in which the seat vibrates, 3001 Mel to 4000 Mel may be mapped to a range of 31 hertz to 40 hertz in which the seat vibrates, and 4001 Mel to 5000 Mel may be mapped to a range of 41 hertz to 50 hertz in which the seat vibrates.

It should be understood that the foregoing method in which the seat is controlled, based on the frequency characteristic of the first simulated sound wave, to vibrate is merely an example for description. In a specific implementation process, a mapping relationship between the MFCC of the first simulated sound wave and the frequency range in which the seat vibrates may be in another form, or the seat may be controlled, based on another frequency characteristic of the first simulated sound wave, to vibrate. This is not specifically limited in embodiments of this application.

According to the control method provided in embodiments of this application, a simulated sound wave with a sound image shift can be controlled, based on traveling information of a carrier, to be played. **In** an acceleration process, a user in a cabin can sense effect of a shift of a sound source from back to front (or from a first position to a second position). **In** a deceleration process, a user in a cabin can sense effect of a shift of a sound source from front to back (or from a second position to a first position). This helps improve driving and riding experience of the user. **In** addition, one or more components of an atmosphere light, an air conditioner, a seat, and a steering wheel in the cabin may be further controlled based on the simulated sound wave, to implement linkage between sounds and light, wind effect, a somatic sense, and the like. **In** an acceleration or deceleration process of a vehicle, the user can sense acceleration or deceleration of the carrier from a plurality of dimensions such as an auditory sense, a visual sense, and a tactile sense.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

The foregoing describes in detail the method provided in embodiments of this application with reference to FIG. 2 to FIG. 7. The following describes in detail apparatuses provided in embodiments of this application with reference to FIG. 8 and FIG. 9. It should be understood that descriptions of apparatus embodiments correspond to the descriptions of the method embodiments. Therefore, for content that is not described in detail, refer to the method embodiments. For brevity, details are not described herein again.

FIG. 8 is a block diagram of a control apparatus 900 according to an embodiment of this application. The apparatus 900 includes an obtaining unit 910 and a first processing unit 920.

The apparatus 900 may include units configured to perform the method in FIG. 3. **In** addition, the units in the apparatus 900 and the foregoing other operations and/or functions are separately used to implement a corresponding procedure of the method embodiment in FIG. 4.

When the apparatus 900 is configured to perform the method 400 in FIG. 4, the obtaining unit 910 may be configured to perform S401 in the method 400, and the first processing unit 920 may be configured to perform S402 in the method 400.

Specifically, the obtaining unit 910 is configured to obtain traveling information of a carrier, and the first processing unit 920 is configured to: when the carrier accelerates or decelerates in response to an indication of a user in the carrier, control, based on the traveling information, at least two sound-emitting apparatuses in a cabin of the carrier to play a first simulated sound wave with a sound image shift.

Optionally, the first processing unit 920 is configured to control a sound image shift speed of the first simulated sound wave based on an acceleration magnitude of the carrier and/or an acceleration change rate of the carrier. The acceleration magnitude of the carrier and the acceleration change rate of the carrier are determined based on the traveling information.

Optionally, the first processing unit 920 is configured to: when the carrier is accelerating, control a sound image shift direction of the first simulated sound wave to be a first direction; or when the carrier is decelerating, control a sound image shift direction of the first simulated sound wave to be a second direction. The first direction and the second direction are opposite directions.

Optionally, the first direction is from rear of the carrier to front of the carrier, and the second direction is from the front of the carrier to the rear of the carrier.

Optionally, the apparatus further includes a second processing unit configured to determine, based on the traveling information, that the carrier steers to a third direction. The first processing unit 920 is configured to control the sound image shift direction of the first simulated sound wave based on the acceleration magnitude and the third direction.

In some possible implementations, the first processing unit and the second processing unit are a same processing unit.

Optionally, the apparatus further includes a generation unit, and the generation unit is configured to generate a second simulated sound wave based on the traveling information. The first processing unit 920 is configured to control, based on the second simulated sound wave, the at least two sound-emitting apparatuses to play the first simulated sound wave with the sound image shift.

Optionally, the first processing unit 920 is configured to control the sound image shift direction and/or the sound image shift speed of the first simulated sound wave based on a fundamental frequency characteristic of the second simulated sound wave.

Optionally, the first processing unit 920 is configured to: when the fundamental frequency characteristic indicates that a fundamental frequency of the second simulated sound wave gradually increases, control a sound image of the first simulated sound wave to shift from the rear of the carrier to the front of the carrier; or when the fundamental frequency characteristic indicates that a fundamental frequency of the second simulated sound wave gradually decreases, control a sound image of the first simulated sound wave to shift from the front of the carrier to the rear of the carrier.

Optionally, the apparatus further includes a third processing unit configured to control, based on the first simulated sound wave, a light display device in the cabin to display light.

In some possible implementations, the first processing unit and the third processing unit are a same processing unit.

Optionally, the third processing unit is configured to control, based on a fundamental frequency characteristic of the first simulated sound wave, a gradient direction and/or a gradient speed of the light displayed by the light display device.

Optionally, the third processing unit is configured to control, based on an energy characteristic of the first simulated sound wave, brightness of the light displayed by the light display device.

Optionally, the apparatus further includes a fourth processing unit configured to control at least one of a wind direction, wind force, and a temperature of an air conditioner in the cabin based on the first simulated sound wave.

**In** some possible implementations, the first processing unit and the fourth processing unit are a same processing unit.

Optionally, the fourth processing unit is configured to control the wind direction and/or the wind force of the air conditioner based on the fundamental frequency characteristic of the first simulated sound wave.

Optionally, the fourth processing unit is configured to control the temperature of the air conditioner based on the energy characteristic of the first simulated sound wave.

Optionally, the apparatus further includes a fifth processing unit configured to: control, based on the first simulated sound wave, a seat in the cabin to vibrate; and/or control, based on the first simulated sound wave, a steering wheel in the carrier to vibrate.

In some possible implementations, the first processing unit and the fifth processing unit are a same processing unit.

Optionally, the fifth processing unit is configured to control, based on a frequency characteristic of the first simulated sound wave, a frequency at which the seat vibrates.

For example, at least one of the third processing unit to the fifth processing unit may include another component control module shown in FIG. 3. The generation unit may include the sound wave generation module shown in FIG. 3. The first processing unit may include the sound wave processing module shown in FIG. 3. The at least two sound-emitting apparatuses may be included in the sound-emitting module shown in FIG. 3.

It should be understood that division into units in the foregoing apparatus is merely logical function division, and during actual implementation, all or some of the units may be integrated into a physical entity, or the units may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a CPU or a microprocessor, and the memory is a memory inside the apparatus or a memory outside the apparatus. Alternatively, the units in the apparatus may be implemented in a form of hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All the units in the foregoing apparatus may be implemented in the form of software invoked by the processor, or may be implemented in the form of the hardware circuit, or some of the units are implemented in the form of software invoked by the processor, and remaining units are implemented in the form of the hardware circuit.

In embodiments of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of the hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units in the apparatus may be integrated, or may be implemented independently. In an implementation, the units may be integrated together and implemented in a form of system-on-a-chip (system-on-a-chip, SOC). The SOC may include at least one processor configured to implement any one of the methods or implement functions of the units in the apparatus. Types of the at least one processor may be different, for example, including a CPU and an FPGA, a CPU and an artificial intelligence processor, or a CPU and a GPU.

In a specific implementation process, the operations performed by the obtaining unit 910 and the first processing unit 920 may be performed by a same processor, or may be performed by different processors, for example, separately performed by a plurality of processors. In a specific implementation process, the one or more processors may be processors disposed in the computing platform 150 shown in FIG. 1, or the apparatus 900 may be a chip disposed in the vehicle 100.

FIG. 9 is a block diagram of a control apparatus according to an embodiment of this application. The control apparatus 1000 shown in FIG. 9 may include a processor 1010, a transceiver 1020, and a memory 1030. The processor 1010, the transceiver 1020, and the memory 1030 are connected through an internal connection path. The memory 1030 is configured to store instructions. The processor 1010 is configured to execute the instructions stored in the memory 1030. The transceiver 1020 receives/sends some parameters. Optionally, the memory 1030 may be coupled to the processor 1010 through an interface, or may be integrated with the processor 1010.

It should be noted that the transceiver 1020 may include but is not limited to a transceiver apparatus such as an input/output interface (input/output interface), to implement communication between the apparatus 1000 and another device or a communication network.

The memory 1030 may be a read-only memory (read-only memory, ROM), a static storage device, a dynamic storage device, or a random access memory (random access memory, RAM).

The transceiver 1020 uses a transceiver apparatus, for example but not limited to, a transceiver, to implement communication between the apparatus 1000 and another device or a communication network.

In a specific implementation process, the apparatus 1000 may be disposed in the computing platform 150 shown in FIG. 1.

An embodiment of this application further provides a control system. The control system may include the foregoing apparatus 900 or the foregoing apparatus 1000, and at least two sound-emitting apparatuses.

An embodiment of this application further provides a carrier. The carrier includes the foregoing apparatus 900, the foregoing apparatus 1000, or the foregoing control system.

In some possible implementations, the carrier may be a vehicle.

An embodiment of this application further provides a computer program product. The computer program product includes computer program code. When the computer program code is run on a computer, the computer is enabled to implement the method in embodiments of this application.

An embodiment of this application further provides a computer-readable storage medium. The computer-readable storage medium stores computer instructions. When the computer instructions are run on a computer, the computer is enabled to implement the method in embodiments of this application.

An embodiment of this application further provides a chip, including a circuit configured to perform the method in embodiments of this application.

In an implementation process, steps in the foregoing method can be implemented by using a hardware integrated logic circuit in a processor, or by using instructions in a form of software. The method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in a memory, and a processor reads information in the memory and completes the steps in the foregoing method in combination with hardware of the processor. To avoid repetition, details are not described herein again.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of software functional unit and sold or used as an independent product, the functions may be stored in a computer-readable storage medium. Based on such an understanding, the technical solutions of this application essentially or some of the technical solutions may be implemented in a form of software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
obtaining traveling information of a carrier; and
when the carrier accelerates or decelerates in response to an indication of a user in the carrier, controlling, based on the traveling information, at least two sound-emitting apparatuses in a cabin of the carrier to play a first simulated sound wave with a sound image shift.

2. The method according to claim 1, wherein the method further comprises:
controlling a sound image shift speed of the first simulated sound wave based on an acceleration magnitude of the carrier and/or an acceleration change rate of the carrier, wherein the acceleration magnitude of the carrier and the acceleration change rate of the carrier are determined based on the traveling information.

3. The method according to claim 1, wherein the controlling at least two sound-emitting apparatuses in a cabin of the carrier to play a first simulated sound wave with a sound image shift comprises:
when the carrier is accelerating, controlling a sound image shift direction of the first simulated sound wave to be a first direction; or
when the carrier is decelerating, controlling a sound image shift direction of the first simulated sound wave to be a second direction, wherein the first direction and the second direction are opposite directions.

4. The method according to claim 3, wherein the first direction is from rear of the carrier to front of the carrier, and the second direction is from the front of the carrier to the rear of the carrier.

5. The method according to any one of claims 1 to 4, wherein the method further comprises:
determining, based on the traveling information, that the carrier steers to a third direction; and
the controlling at least two sound-emitting apparatuses in a cabin of the carrier to play a first simulated sound wave with a sound image shift comprises:
controlling the sound image shift direction of the first simulated sound wave based on the acceleration magnitude and the third direction.

6. The method according to any one of claims 1 to 5, wherein the controlling, based on the traveling information, at least two sound-emitting apparatuses in a cabin of the carrier to play a first simulated sound wave with a sound image shift comprises:
generating a second simulated sound wave based on the traveling information; and
controlling, based on the second simulated sound wave, the at least two sound-emitting apparatuses to play the first simulated sound wave with the sound image shift.

7. The method according to claim 6, wherein the controlling, based on the second simulated sound wave, the at least two sound-emitting apparatuses to play the first simulated sound wave with the sound image shift comprises:
controlling the sound image shift direction and/or the sound image shift speed of the first simulated sound wave based on a fundamental frequency characteristic of the second simulated sound wave.

8. The method according to claim 7, wherein the controlling the sound image shift direction of the first simulated sound wave based on a fundamental frequency characteristic of the second simulated sound wave comprises:
when the fundamental frequency characteristic indicates that a fundamental frequency of the second simulated sound wave gradually increases, controlling a sound image of the first simulated sound wave to shift from the rear of the carrier to the front of the carrier; or
when the fundamental frequency characteristic indicates that a fundamental frequency of the second simulated sound wave gradually decreases, controlling a sound image of the first simulated sound wave to shift from the front of the carrier to the rear of the carrier.

9. The method according to any one of claims 1 to 8, wherein the method further comprises:
controlling, based on the first simulated sound wave, a light display device in the cabin to display light.

10. The method according to claim 9, wherein the controlling, based on the first simulated sound wave, a light display device in the cabin to display light comprises:
controlling, based on a fundamental frequency characteristic of the first simulated sound wave, a gradient direction and/or a gradient speed of the light displayed by the light display device.

11. The method according to claim 9 or 10, wherein the controlling, based on the first simulated sound wave, a light display device in the cabin to display light comprises:
controlling, based on an energy characteristic of the first simulated sound wave, brightness of the light displayed by the light display device.

12. The method according to any one of claims 1 to 11, wherein the method further comprises:
controlling at least one of a wind direction, wind force, and a temperature of an air conditioner in the cabin based on the first simulated sound wave.

13. The method according to claim 12, wherein the controlling at least one of a wind direction, wind force, and a temperature of an air conditioner in the cabin based on the first simulated sound wave comprises:
controlling the wind direction and/or the wind force of the air conditioner based on the fundamental frequency characteristic of the first simulated sound wave.

14. The method according to claim 12 or 13, wherein the controlling at least one of a wind direction, wind force, and a temperature of an air conditioner in the cabin based on the first simulated sound wave comprises:
controlling the temperature of the air conditioner based on the energy characteristic of the first simulated sound wave.

15. The method according to any one of claims 1 to 14, wherein the method further comprises:
controlling, based on the first simulated sound wave, a seat in the cabin to vibrate; and/or
controlling, based on the first simulated sound wave, a steering wheel in the carrier to vibrate.

16. The method according to claim 15, wherein the controlling, based on the first simulated sound wave, a seat in the cabin to vibrate comprises:
controlling, based on a frequency characteristic of the first simulated sound wave, a frequency at which the seat vibrates.

17. A control apparatus, comprising an obtaining unit and a first processing unit, wherein
the obtaining unit is configured to obtain traveling information of a carrier; and
the first processing unit is configured to: when the carrier accelerates or decelerates in response to an indication of a user in the carrier, control, based on the traveling information, at least two sound-emitting apparatuses in a cabin of the carrier to play a first simulated sound wave with a sound image shift.

18. The apparatus according to claim 17, wherein the first processing unit is configured to:
control a sound image shift speed of the first simulated sound wave based on an acceleration magnitude of the carrier and/or an acceleration change rate of the carrier, wherein the acceleration magnitude of the carrier and the acceleration change rate of the carrier are determined based on the traveling information.

19. The apparatus according to claim 17, wherein the first processing unit is configured to:
when the carrier is accelerating, control a sound image shift direction of the first simulated sound wave to be a first direction; or
when the carrier is decelerating, control a sound image shift direction of the first simulated sound wave to be a second direction, wherein the first direction and the second direction are opposite directions.

20. The apparatus according to claim 19, wherein the first direction is from rear of the carrier to front of the carrier, and the second direction is from the front of the carrier to the rear of the carrier.

21. The apparatus according to any one of claims 17 to 20, wherein the apparatus further comprises a second processing unit configured to determine, based on the traveling information, that the carrier steers to a third direction; and
the first processing unit is configured to control the sound image shift direction of the first simulated sound wave based on the acceleration magnitude and the third direction.

22. The apparatus according to any one of claims 17 to 21, wherein the apparatus further comprises a generation unit, and the generation unit is configured to:
generate a second simulated sound wave based on the traveling information; and
the first processing unit is configured to control, based on the second simulated sound wave, the at least two sound-emitting apparatuses to play the first simulated sound wave with the sound image shift.

23. The apparatus according to claim 22, wherein the first processing unit is configured to:
control the sound image shift direction and/or the sound image shift speed of the first simulated sound wave based on a fundamental frequency characteristic of the second simulated sound wave.

24. The apparatus according to claim 23, wherein the first processing unit is configured to:
when the fundamental frequency characteristic indicates that a fundamental frequency of the second simulated sound wave gradually increases, control a sound image of the first simulated sound wave to shift from the rear of the carrier to the front of the carrier; or
when the fundamental frequency characteristic indicates that a fundamental frequency of the second simulated sound wave gradually decreases, control a sound image of the first simulated sound wave to shift from the front of the carrier to the rear of the carrier.

25. The apparatus according to any one of claims 17 to 24, wherein the apparatus further comprises a third processing unit configured to:
control, based on the first simulated sound wave, a light display device in the cabin to display light.

26. The apparatus according to claim 25, wherein the third processing unit is configured to:
control, based on a fundamental frequency characteristic of the first simulated sound wave, a gradient direction and/or a gradient speed of the light displayed by the light display device.

27. The apparatus according to claim 25 or 26, wherein the third processing unit is configured to:
control, based on an energy characteristic of the first simulated sound wave, brightness of the light displayed by the light display device.

28. The apparatus according to any one of claims 17 to 27, wherein the apparatus further comprises a fourth processing unit configured to:
control at least one of a wind direction, wind force, and a temperature of an air conditioner in the cabin based on the first simulated sound wave.

29. The apparatus according to claim 28, wherein the fourth processing unit is configured to:
control the wind direction and/or the wind force of the air conditioner based on the fundamental frequency characteristic of the first simulated sound wave.

30. The apparatus according to claim 28 or 29, wherein the fourth processing unit is configured to:
control the temperature of the air conditioner based on the energy characteristic of the first simulated sound wave.

31. The apparatus according to any one of claims 17 to 30, wherein the apparatus further comprises a fifth processing unit configured to:
control, based on the first simulated sound wave, a seat in the cabin to vibrate; and/or
control, based on the first simulated sound wave, a steering wheel in the carrier to vibrate.

32. The apparatus according to claim 31, wherein the fifth processing unit is configured to:
control, based on a frequency characteristic of the first simulated sound wave, a frequency at which the seat vibrates.

33. A control apparatus, comprising:
a memory, configured to store a computer program; and
a processor, configured to execute the computer program stored in the memory, to enable the apparatus to perform the method according to any one of claims 1 to 16.

34. A control system, wherein the control system comprises at least two sound-emitting apparatuses and a computing platform, and the computing platform comprises the apparatus according to any one of claims 17 to 33.

35. A carrier, comprising the apparatus according to any one of claims 17 to 33, or the system according to claim 34.

36. The carrier according to claim 35, wherein the carrier is a vehicle.

37. A computer-readable storage medium, wherein the computer-readable storage medium stores instructions, and when the instructions are executed by a processor, the processor is enabled to implement the method according to any one of claims 1 to 16.

38. A chip, wherein the chip comprises a circuit, and the circuit is configured to perform the method according to any one of claims 1 to 16.
